(19) Europäisches Patentamt
European Patent Office
Office européen des brevets

(11) Veröffentlichungsnummer: **0 056 940**
**B1**

(12) # EUROPÄISCHE PATENTSCHRIFT

(45) Veröffentlichungstag der Patentschrift: **18.07.84**

(51) Int. Cl.³: **G 03 C 5/54,** C 09 B 47/26, C 07 D 487/22

(21) Anmeldenummer: **82100122.9**

(22) Anmeldetag: **11.01.82**

(54) **Neue Phthalocyaninverbindungen, ein farbfotografisches Aufzeichnungsmaterial, das die neuen Phthalocyaninverbindungen enthält sowie ein farbfotografisches Bild, das aus den Phthalocyaninverbindungen freigesetzte Phthalocyaninfarbstoffe als Bildfarbstoffe enthält.**

(30) Priorität: **15.01.81 DE 3101036**

(43) Veröffentlichungstag der Anmeldung: **04.08.82 Patentblatt 82/31**

(45) Bekanntmachung des Hinweises auf die Patenterteilung: **18.07.84 Patentblatt 84/29**

(84) Benannte Vertragsstaaten: **BE DE FR GB**

(56) Entgegenhaltungen:
**EP - A - 0 004 399**
**DE - A - 2 630 999**

**RESEARCH DISCLOSURE, Nr. 156, April 1977, Seiten 32-39, Zusammenfassung Nr. 15654, Industrial Opportunities Ltd., Van Hants, G.B. "Fotographisches farbstoffdiffusions-übertragungsverfahren"**

(73) Patentinhaber: **AGFA-GEVAERT Aktiengesellschaft, D-5090 Leverkusen 1 (DE)**

(72) Erfinder: **Melzer, Arnfried, Dr., Wolfskaul 12, D-5000 Koeln 80 (DE)**
Erfinder: **Vetter, Hans, Dr., Gerstenkamp 19, D-5000 Koeln 80 (DE)**
Erfinder: **Marx, Paul, Dr., Nauener Strasse 25, D-5090 Leverkusen 1 (DE)**
Erfinder: **Jaeken, Jan, Dr., Guyoddrees Nr. 62, B-2130 Brasschaad (BE)**
Erfinder: **Janssens, Wilhelmus, Dr., Jan-van-Harcourtlaan 35, B-3220 Aarschot (BE)**

**EP 0 056 940 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft

1. neue Phthalocyaninverbindungen, die als nichtdiffundierende farbgebende Verbindungen für das Farbdiffusionsübertragungsverfahren geeignet sind;
2. ein farbfotografisches Aufzeichnungsmaterial für die Herstellung farbiger Bilder, das die Phthalocyaninverbindungen enthält;
3. ein farbfotografisches Bild, das aus den Phthalocyaninverbindungen freigesetzte blaugrüne Phthalocyaninfarbstoffe als Bildfarbstoffe enthält.

Bekanntlich können bei dem Farbdiffusionsübertragungsverfahren für die Erzeugung von Bildfarbstoffen nichtdiffundierende farbgebende Verbindungen verwendet werden, aus denen als Folge der Entwicklung diffusionsfähige Farbstoffe oder deren Vorläufer bildmäßig in Freiheit gesetzt werden. Derartige Verbindungen sollen im Rahmen der vorliegenden Erfindungsbeschreibung vereinfachend auch als »Farbabspalter« (»Dye Releaser«) bezeichnet werden. Die Erfindung betrifft nun insbesondere solche Farbabspalter, die als Funktion der Entwicklung unter alkalischen und gleichzeitig reduzierenden Bedingungen unter Abspaltung von mindestens einem diffusionsfestmachenden Rest einen diffusionsfähigen blaugrünen Phthalocyaninfarbstoff freisetzen.

In der veröffentlichten europäischen Patentanmeldung 0 004 399 sind nicht-diffundierende chinoide Verbindungen beschrieben, die unter der Einwirkung eines bei gleichzeitig ablaufender Silberentwicklung nicht verbrauchten Reduktionsmittels — nachfolgend als Elektronendonorverbindung oder ED-Verbindung bezeichnet — reduziert werden und in einer Eliminierungsreaktion einen diffusionsfähigen Farbstoff mit einem Sulfinsäurerest als Abgangsgruppe freisetzen. Da die in dem lichtempfindlichen Element des fotografischen Aufzeichnungsmaterials ursprünglich in gleichförmiger Verteilung vorhandene ED-Verbindung durch die Entwicklung des Silberhalogenids bildmäßig verbraucht wird, stellt sich nach dem Anspringen der Silberhalogenidentwicklung rasch ein Zustand ein, bei dem eine bildmäßige Verteilung der ED-Verbindung vorliegt.

Infolgedessen erfolgt die Reduktion der nicht-diffundierenden chinoiden Verbindung bildmäßig. Der als Folge der Reduktion abgespaltene diffusionsfähige Farbstoff-Sulfinsäurerest wird dementsprechend bildmäßig freigesetzt und auf eine Bildempfangsschicht übertragen oder aus der Schicht herausgelöst. Eine bildmäßige Verteilung des Farbstoffes besteht also sowohl hinsichtlich des abgespaltenen und alsbald in die Bildempfangsschicht übertragenen als auch hinsichtlich des nicht abgespaltenen nicht-diffundierenden Farbstoffanteils. Das gewünschte Farbbild kann also sowohl ein Übertragungsbild in einer Bildempfangsschicht als auch ein Restbild (»Retained Image«) in der bilderzeugenden Schicht sein. Es besteht auch die Möglichkeit, das Farbstoffrestbild in einem zweiten nicht bildmäßigen Reduktionsschritt in diffusionsfähige Farbstoffe überzuführen und auf eine weitere Bildempfangsschicht zu übertragen.

Die bildmäßige Freisetzung der Farbstoffe beruht vermutlich darauf, daß durch bildmäßige Übertragung von 2 Elektronen von der ED-Verbindung auf den Farbabspalter eine unter alkalischen Bedingungen spaltbare hydrochinonartige Verbindung entsteht, aus der dann der Farbstoff freigesetzt wird. Die Elektronenübertragung erfolgt entweder durch direkte Reduktion in einer gemeinsamen, bevorzugt hydrophoben Phase oder in 2 zumindest ursprünglich separierten Phasen, wobei die Verwendung einer Elektronenüberträgerverbindung statthaft ist.

Geeignete ED-Verbindungen sind beispielsweise nicht oder nur wenig diffundierende Derivate des Hydrochinons, des Benzisoxazolons, des p-Aminophenols oder der Ascorbinsäure (z. B. Ascorbylpalmitat). Besonders günstige ED-Verbindungen sind in EP-A 0 034 749 beschrieben. Als Elektronenüberträgerverbindung eignen sich im wesentlichen alle bekannten Entwicklerverbindungen, insbesondere aber substituierte Phenidone.

Die Auswahl geeigneter abspaltbarer Farbstoffreste bedeutet für ein auf dem beschriebenen Verfahren aufgebautes farbfotografisches Aufzeichnungsmaterial ein besonders schwieriges Problem, weil die benutzten Farbstoffe eine ausreichend klare Nuance, gute Lichtechtheit in einer Bildempfangsschicht und gute Diffusionsfähigkeit aufweisen sollen. Für das hier in Betracht gezogene Farbabspaltersystem waren anwendungstechnisch vollwertige Blaugrünfarbstoffe bisher nicht bekannt. Zwar ist aus der veröffentlichten europäischen Patentanmeldung 0 004 399 die Verwendung von ursprünglich gelbbraunen, auf der Bildempfangsschicht aber in der blaugrünen anionischen Form gebeizten Farbstoffen vom Typ des 4-(2-Alkansulfonyl-4-nitrophenylazo)-1-naphthols bekannt. Diese Verbindungsklasse zeichnet sich durch gute Diffusionsfähigkeit und zufriedenstellende Farbnuancen aus. Ihre Lichtechtheit befriedigt dagegen nicht; sie weicht insbesondere in stark nachteiliger Weise vom Lichtechtheitsverhalten der nach dem gleichen Verfahren für die Herstellung der gelben und purpurnen Farbtöne verwendeten Monoazofarbstoffe ab.

Die Verwendung von nicht-diffundierenden Farbabspaltern vom Phthalocyanintyp in Aufzeichnungsmaterialien für das Farbdiffusionsübertragungsverfahren ist an sich nicht neu. Farbabspalter in Form von oxidierbaren Redoxverbindungen, die nach bildmäßiger Oxidation einen diffusionsfähigen blaugrünen Phthalocyaninfarbstoff freisetzen, sind z. B. in Research Disclosure Nr. 15 654 (April 1977)

beschrieben, spezielle Typen davon auch in DE-A-2 630 999. Diesen Verbindungen ist gemeinsam, daß die Abspaltung des Farbstoffes erst nach der bildmäßigen Oxidation durch das Oxidationsprodukt einer Hilfsentwickler- oder Elektronenüberträgerverbindung einsetzt und die Diffusion dementsprechend verzögert abläuft. Diese Verzögerung der Abspaltungsreaktion aus einem chinoiden Oxidationsprodukt des Farbabspalters ist verfahrensbedingt und kann nicht beseitigt werden.

In Farbabspaltersystemen der in der veröffentlichten europäischen Patentanmeldung 0 004 399 beschriebenen Art sind die Verhältnisse dagegen von vornherein anders. Die Abspaltungsreaktion kann sofort einsetzen, wenn nennenswerte Anteile der ED-Verbindung in Form des konjugierten Anions bzw. der konjugierten anionischen Formen, nämlich Monoanion und Dianion, zur Verfügung stehen.

Die Verwendung von Phthalocyaninfarbstoffen, worunter im Sinn der Erfindung Derivate des nichtmetallisierten Phthalocyanins sowie auch des Nickelphthalocyanins und insbesondere des Kupferphthalocyanins verstanden werden, ist für das Verfahren der veröffentlichten europäischen Patentanmeldung 0 004 399 besonders interessant, weil Phthalocyaninfarbstoffe eine mit anderen Blaugrün-Farbstofftypen unerreichte Klarheit und Brillanz der Nuance aufweisen, so wie eine erhöhte Lichtechtheit, die mit derjenigen der für die Farbtöne Gelb und Purpur verwendeten Azomethin- und Monoazofarbstoffe vergleichbar ist. Die Nachteile der Phthalocyaninfarbstoffe, nämlich ihre unbefriedigende Löslichkeit in wäßrigen und nicht wäßrigen Medien und ihre im Vergleich mit anderen Farbstofftypen erheblich langsamere Diffusion durch den Schichtverband wären jedoch an sich auch für das reduktiv spaltbare Farbabspaltersystem der veröffentlichten europäischen Patentanmeldung 0 004 399 zu erwarten.

Der Erfindung liegt die Aufgabe zugrunde, Blagrün-Farbstoffe liefernde Farbabspalter anzugeben, die insgesamt ein Eigenschaftsprofil aufweisen, das sie für die Verwendung in farbfotografischen Aufzeichnungsmaterialien für das Farbdiffusionsübertragungsverfahren gemäß der veröffentlichten europäischen Patentanmeldung 0 004 399 geeignet macht, so daß sie erfolgreich in Kombination mit den dort beschriebenen, für die Erzeugung der gelben und purpurfarbigen Farbtöne verwendeten Farbabspaltern mit Monoazo- bzw. Azomethinfarbstoffgruppen in Aufzeichnungsmaterialien für die Herstellung mehrfarbiger Bilder eingesetzt werden können.

Es wurde nun gefunden, daß Farbabspalter der nachstehend angegebenen Formel (I) (q = 0) folgende hervorragende Eigenschaften haben:

1. Sie sind in hydrophoben Einbettungsmedien sehr gut löslich, so daß sie gemeinsam mit ED-Verbindungen in Form eines ölbildnerhaltigen Emulgates in die Schichten eines fotografischen Aufzeichnungsmaterials eingelagert werden können.
2. Sie weisen eine sehr geringe Kristallisationstendenz auf.
3. Sie weisen eine hohe Reaktivität gegenüber ED-Verbindungen auf.
4. Sie setzen bei der fotografischen Entwicklung anionische Farbstoffe der Formel (I) (q = 1) frei, die einerseits zunächst überraschend gut diffusionsfähig sind und andererseits eine sehr gute Stabilität und Diffusionsfestigkeit aufweisen, wenn sie nach erfolgter Diffusion in der Bildempfangsschicht mittels kationischer Beizen festgelegt sind.

Verbindungen der Formel (I) haben die Struktur

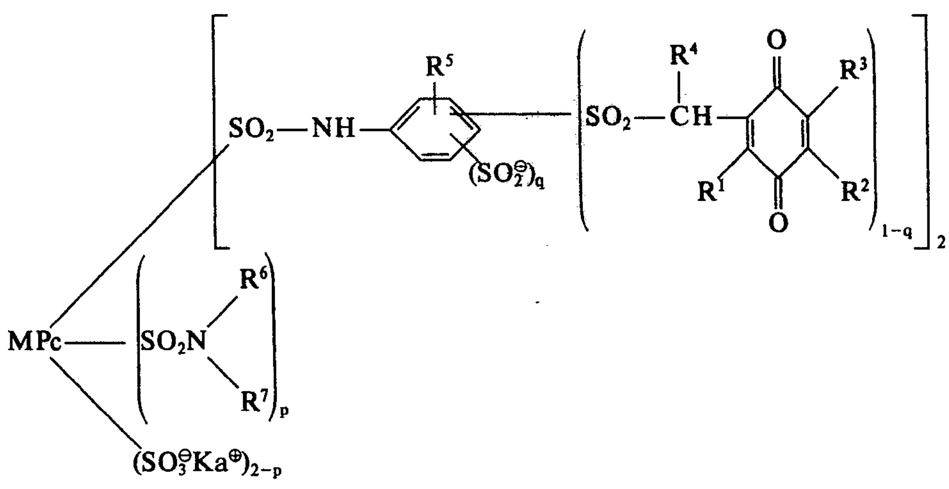

(I)

worin bedeuten

MPceinen tetravalenten Phthalocyaninrest der Formel

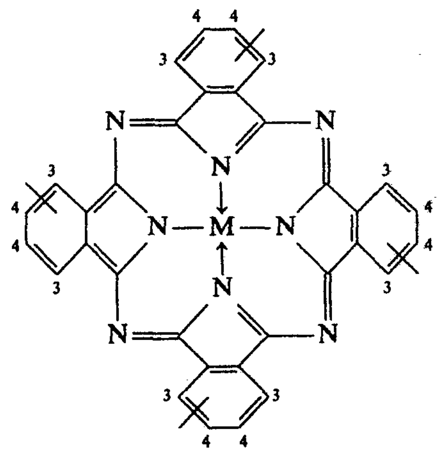

M = 2H, Ni oder Cu

$R^1$, $R^2$, $R^3$ Wasserstoff, Halogen, Alkyl, Alkoxy, gegebenenfalls substituiertes Aryl oder Acylamino, oder $R^2$ und $R^3$ vervollständigen einen ankondensierten Ring,

$R^4$ Wasserstoff oder Alkyl,

$R^5$ Wasserstoff, Halogen oder Alkyl, Alkoxy oder Acylamino mit jeweils bis zu 4 C-Atomen,

$R^6$, $R^7$ Wasserstoff oder gegebenenfalls substituiertes Alkyl, Alkenyl, gegebenenfalls substituiertes Aryl oder $R^6$ und $R^7$ zusammen den zur Vervollständigung eines gesättigten 5- oder 6gliedrigen Ringes erforderlichen Rest, wobei $R^6$ und $R^7$ zusammen nicht mehr als 7 C-Atome enthalten,

$Ka^{\oplus}$ ein Kation,

p = 0, 1 oder 2,

q = 0 (für Farbabspalter);
= 1 (für abgespaltene Farbstoffe),

wobei mindestens einer der Reste $R^1$, $R^2$, $R^3$ und $R^4$ einen diffusionsfestmachenden Rest enthält.

Gegenstand der Erfindung sind Farbabspalter (nichtdiffundierende fargbebende Verbindungen) der Formel (I) (q = 0).

Ein weiterer Gegenstand der Erfindung ist ein farbfotografisches Aufzeichnungsmaterial für die Herstellung farbiger Bilder nach dem Farbdiffusionsübertragungsverfahren mit mindestens einer lichtempfindlichen Silberhalogenidemulsionsschicht und zugeordnet hierzu mindestens einer nicht-diffundierenden farbgebenden Verbindung der Formel (I) (q = 0).

Ein weiterer Gegenstand der Erfindung ist ein farbiges Bild bestehend aus einer auf einem Schichtträger angeordneten Bildempfangsschicht mit einer kationischen Beize und einer darin enthaltenen bildmäßigen Verteilung eines Farbstoffes der Formel (I) (q = 1).

Die durch $R^1$, $R^2$ und $R^3$ dargestellten Alkyl- und Alkoxyreste können geradkettig oder verzweigt sein und enthalten in der Regel bis zu 18 C-Atome. Beispiele sind Methyl, n-Propyl, tert.-Butyl, Tetradecyl, Octadecyl, Methoxy, Dodecoxy, Tetradecoxy. Die durch die genannten Reste $R^1$, $R^2$ und $R^3$ dargestellten Arylreste sind beispielsweise Phenylgruppen, die substituiert sein können, z. B. durch langkettige Alkoxygruppen.

In den durch die genannten Reste $R^1$, $R^2$ und $R^3$ dargestellten Acylaminoresten leiten sich die Acylgruppen ab von aliphatischen oder aromatischen Carbon- oder Sulfonsäuren. Bei den durch $R^2$ und $R^3$ vervollständigten ankondensierten Ringen handelt es sich bevorzugt um carbocyclische Ringe, z. B. ankondensierte Benzol- oder Bicyclo-[2,2,1]-heptenringe.

Ein durch $R^4$ dargestellter Alkylrest kann geradkettig oder verzweigt, substituiert oder unsubstituiert sein und bis zu 21 C-Atome enthalten. Beispiele sind Methyl, Nitromethyl, Phenylmethyl (Benzyl), Heptyl, Tridecyl; Pentadecyl, Heptadecyl, $-C_{21}H_{43}$.

Beispiele für die durch $R^5$ dargestellten Alkyl-, Alkoxy- und Acylaminogruppen sind Methyl, Methoxy, Acetamido und Methylsulfonamido.

Beispiele für $R^6$ und $R^7$ sind Methyl, Ethyl, Hydroxyethyl, Allyl, Sulfamoylphenyl. Beispiele für durch $R^6$ und $R^7$ vervollständigte Ringe sind Pyrrolidin-, Piperidin- und Morpholinringe.

Beispiele für durch $Ka^{\oplus}$ dargestellte Kationen sind $H^{\oplus}$, anorganische Kationen wie $Na^{\oplus}$, $Li^{\oplus}$ oder $NH_4^{\oplus}$, und organische Kationen, die beispielsweise von organischen stickstoffhaltigen Basen hergeleitet sind, wie etwa $N(CH_3)_4^{\oplus}$, Pyridinium, $HO-CH_2-CH_2-NH_3^{\oplus}$, $(HO-CH_2-CH_2-)_3NH^{\oplus}$ oder im Falle von abgespaltenen und gebeizten Phthalocyaninfarbstoffen (q = 1) quaternäre Ammoniumgruppen eines Beizmittels.

Der Index p kann für konkrete Präparate (Chargen) der erfindungsgemäßen Farbabspalter in dem Bereich von 0 bis 2 auch einen nicht ganzzahligen Wert annehmen; es handelt sich dann um Durchschnittswerte von Gemischen, in deren Komponenten p ganzzahlig (0,1 oder 2) ist.

Bevorzugte Ausführungsformen der erfindungsgemäßen Farbabspalter sind solche, bei denen $R^1$, $R^2$ und $R^3$ in einem chinoiden Trägerrest zusammen nicht mehr als 8, insbesondere nicht mehr als 5

C-Atome enthalten, und $R^4$ einen Alkylrest mit mindestens 11 C-Atomen darstellt.

Bevorzugte Ausführungsforen sind weiterhin solche, bei denen $R^1$ einen Alkoxyphenylrest mit mindestens 12 C-Atomen in der Alkoxygruppe bedeutet und $R^2$, $R^3$, $R^4$ zusammen nicht mehr als 8 C-Atome enthalten.

Als diffusionsfestmachende Reste sind solche Reste anzusehen, die es ermöglichen, die erfindungsgemäßen Verbindungen in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische, gegebenenfalls aromatische Gruppen enthalten. Mit dem übrigen Molekülteil sind diese Reste entweder direkt oder indirekt, z. B. über eine der folgenden Gruppen verbunden: $-NHCO-$, $-NHSO_2-$, $-NR-$, wobei R Wasserstoff oder Alkyl bedeutet, $-O-$ oder $-S-$. Zusätzlich kann der diffusionsfestmachende Rest auch wasserlöslichmachende Gruppen enthalten, wie z. B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z. B., wenn das verwendete Gesamtmolekül groß genug ist, als »diffusionsfestmachende Reste« auch kürzerkettige Reste zu verwenden.

Die erfindungsgemäßen Farbabspalter enthalten pro Phthalocyanineinheit zwei diffusionsfest machende abspaltbare chinoide Trägerreste der Formel

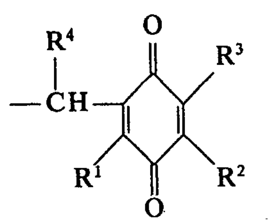

»Carquin«

Die abspaltbaren Trägerreste sind über ein Bindeglied der Formel

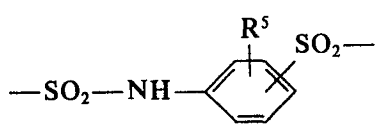

»Link«

mit dem Phthalocyaninrest MPc verknüpft, wobei zwei der üblicherweise vier vorhandenen freien Bindungen abgesättigt sind. Bei den abgespaltenen Farbstoffen der Formel (I) (q = 1) befinden sich an dieser Stelle anstatt der Gruppen -Link-Carquin die Gruppen der Formel

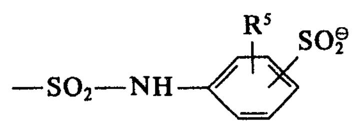

Die beiden restlichen freien Bindungen an MPc sind in jedem Fall (q = 0, q = 1) mit Sulfonatresten ($-SO_3^{\ominus}Ka^{\oplus}$) bzw. Sulfamoylresten

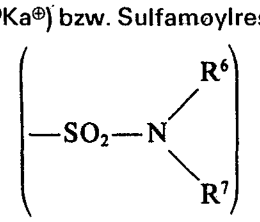

abgesättigt, wobei deren Anteil relativ zueinander variieren kann, um dem Farbabspalter bzw. dem daraus abgespalteten Farbstoff optimale Dispergierbarkeit und Diffusionseigenschaften zu verleihen.

Beispiele für erfindungsgemäßen farbgebenden Verbindungen (Farbabspalter) sind im folgenden angegeben (CuPc = Kupferphthalocyanin).

Verb. 1

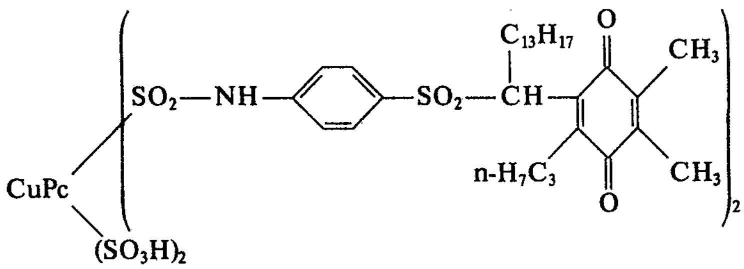

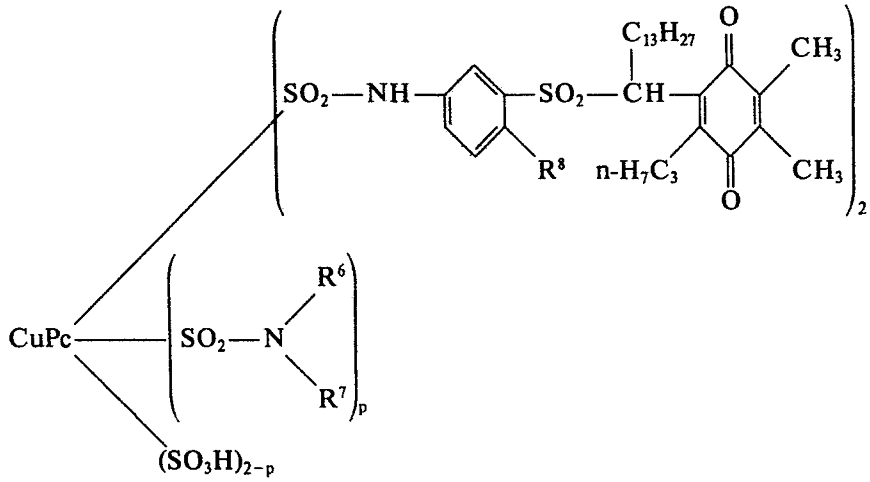

| Verb. | $R^6$ | $R^7$ | $R^8$ | p |
|---|---|---|---|---|
| 2 | – | – | $—CH_3$ | 0 |
| 3 | H | $—CH_2—CH_2—OH$ | $—CH_3$ | 1 |
| 4 | H | $—CH_2—CH_2—OH$ | $—CH_3$ | 2 |
| 5 | $—C_2H_5$ | $—C_2H_5$ | $—CH_3$ | 1 |
| 6 | $—C_2H_5$ | $—C_2H_5$ | $—CH_3$ | 2 |
| 7 | $—C_2H_4—O—C_2H_4—$ | | $—CH_3$ | 1 |
| 8 | $—C_2H_4—O—C_2H_4—$ | | $—CH_3$ | 2 |
| 9 | H } | 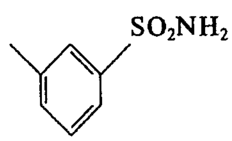 | $—CH_3$ | 1 |
| 10 | H | | $—CH_3$ | 2 |
| 11 | H | $—CH_2—CH{=}CH_2$ | $—CH_3$ | 1 |
| 12 | H | $—CH_2—CH{=}CH_2$ | $—CH_3$ | 2 |
| 13 | – | – | $—OCH_3$ | 0 |
| 14 | H | $—CH_2—CH_2—OH$ | $—OCH_3$ | 1 |
| 15 | H | $—CH_2—CH_2—OH$ | $—OCH_3$ | 2 |
| 16 | $—C_2H_4—O—C_2H_4—$ | | $—OCH_3$ | 1 |
| 17 | $—C_2H_4—O—C_2H_4—$ | | $—OCH_3$ | 2 |

Fortsetzung

| Verb. | $R^6$ | $R^7$ | $R^8$ | p |
|---|---|---|---|---|
| 18 | – | – | $—H$ | 0 |
| 19 | H | $—CH_2—CH_2—OH$ | $—H$ | 1 |
| 20 | H | $—CH_2—CH_2—OH$ | $—H$ | 2 |
| 21 | $—C_2H_4—O—C_2H_4—$ | | $—H$ | 1 |
| 22 | $—C_2H_4—O—C_2H_4—$ | | $—H$ | 2 |

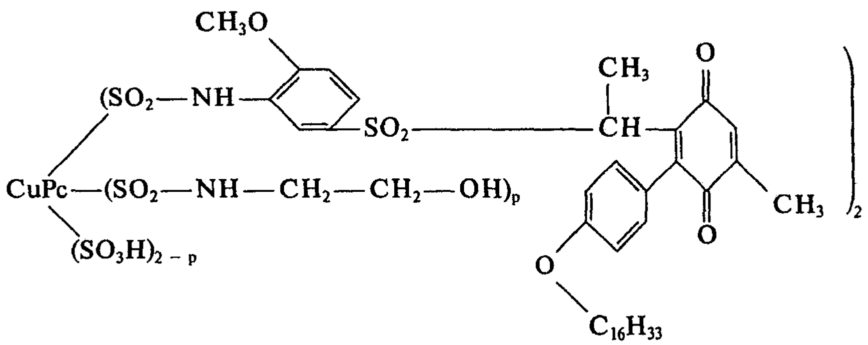

Verb. 23: p = 0
Verb. 24: p = 1
Verb. 25: p = 2

Das bei der Herstellung der erfindungsgemäßen Farbabspalter als Ausgangsverbindung verwendete Phthalocyanintetrasulfochlorid MPc $(SO_2Cl)_4$ bietet an sich die Möglichkeit der Anknüpfung von bis zu 4 chinoiden Trägerresten. Überraschend hat es sich aber herausgestellt, daß Farbabspalter der erfindungsgemäßen Art bei Anwesenheit von genau 2 chinoiden Trägerresten pro Phthalocyanineinheit für den Einsatz in farbfotografischen Aufzeichnungsmaterialien besonders vorteilhafte Eigenschaften aufweisen. Die Ursache für das günstige Gesamtverhalten der erfindungsgemäßen Farbabspalter, das sich von demjenigen ähnlich zusammengesetzter nicht-diffundierender farbgebender Verbindungen mit abweichender Anzahl chinoider Trägerreste deutlich unterscheidet, ist zwar im einzelnen nicht bekannt. Doch soll nachstehend der Versuch einer Deutung unternommen werden.

Durch Vergrößerung der Anzahl der chinoiden Trägerreste pro Phthalocyanineinheit, z. B. auf 3 oder 4, wird zwar die Bildentstehungsgeschwindigkeit nicht beeinflußt, da die Diffusionseigenschaften des abgespaltenen Farbstoffes nahezu unverändert bleiben. Eine ausreichende Dichte des Farbübertragsbildes läßt sich jedoch dann nur durch überproportionale Erhöhung der Menge an ED-Verbindung sicherstellen, was aber einen Verlust an Empfindlichkeit zur Folge hat. Um diesen Empfindlichkeitsverlust wett zu machen, sind wiederum erhöhte Silberaufträge erforderlich. Falls hingegen der Phthalocyaninrest nur mit einem einzigen chinoiden Trägerrest versehen wird, dann kann zwar die Menge an ED-Verbindung und damit der Silberauftrag gering gehalten werden. Andererseits aber hat es sich herausgestellt, daß dann eine ausreichende Diffusionsfähigkeit der abgespaltenen Farbstoffe nur bei Anwesenheit von mindestens 2 weiteren anionisch hydrophilen Gruppen pro Phthalocyanineinheit gewährleistet ist, während die dritte höchstens durch einen nichtlipophilen hydrophobierenden Rest ersetzt sein darf. Die gemeinsame hydrophobe Einlagerung solcher Verbindungen mit der ED-Verbindung ist aber nicht möglich, so daß eine ausreichende Reaktivität nicht erzielt werden kann. Insgesamt ergibt sich hieraus, daß mit Phthalocyaninfarbabspaltern, die nur einen chinoiden Trägerrest enthalten, eine ausreichende Bildentstehungsgeschwindigkeit nicht erreicht werden kann.

Die Vorteile, die sich aus der Verwendung von Phthalocyaninfarbabspaltern des hier betrachteten Typs mit genau 2 abspaltbaren chinoiden Trägerresten ergeben, sind überraschend und waren für den Fachmann nicht vorauszusehen.

Zur Herstellung der erfindungsgemäßen Farbabspalter bedient man sich einer im Prinzip bekannten Methode, indem nämlich ein Phthalocyanintetrasulfochlorid MPc-$(SO_2Cl)_4$ zunächst mit einem durch eine primäre Aminogruppe modifizierten chinoiden Trägerrest der Formel (II)

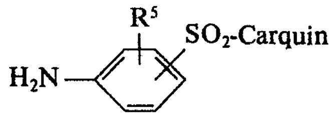

(II)

im vorher festgelegten molaren Verhältnis, vorzugsweise im Verhältnis 1 : 2, sowie gegebenenfalls mit einem primären oder sekundären Amin der Formel (III)

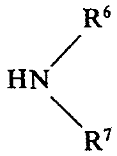

(III)

in einer durch den Zahlenindex p festgelegten Menge umgesetzt wird, worauf die restlichen Sulfochloridgruppen mit Wasser verseift werden. Die Umsetzungen mit dem durch die primäre Aminogruppe modifizierten chinoiden Trägerrest (II) und mit dem primären oder sekundären Amin (III) können gegebenenfalls gleichzeitig oder auch nacheinander durchgeführt werden, wobei im letzteren Fall die Isolierung des Produktes aus der Umsetzung mit dem aminogruppenmodifizierten chinoiden Trägerrest unterbleiben kann. Als Reaktionsmedium eignen sich beispielsweise wenig oder mäßig polare Lösungsmittel wie Dichlormethan, Chlorbenzol, Tetrahydrofuran, Pyridin oder auch sogenannte dipolar-aprotische Lösungsmittel wie Dimethylformamid, Dimethylacetamid, N-Methylpyrrolidon. Zusatz eines neutralen Trockenmittels wie z. B. Natriumsulfat oder sogenanntes Molekularsieb kann zweckmäßig sein, insbesondere wenn $p=2$ gewünscht wird. Als Hilfsbase ist beispielsweise Pyridin hervorragend geeignet. Die Reaktionstemperaturen und Reaktionszeiten können je nach Nukleophilie der einzusetzenden Amine, nach Solvenseffekten der Lösungsmittel und nach Wirksamkeit der Hilfsbase in weiten Grenzen variiert werden.

Man erhält nach diesem Verfahren überraschend gut definierte und reproduzierbare Produkte, die — wie in der Phthalocyaninchemie allgemein bekannt — als Gemische von Stellungsisomeren vorliegen. So existiert beispielsweise »normales« Kupferphthalocyanintetrasulfochlorid bereits in 4 verschiedenen theoretisch denkbaren Stellungsisomeren, wenn angenommen wird, daß die 4 gleichen Substituenten auf die 4 Benzolringe des Phthalocyaninsystems verteilt jeweils in einer 3-Stellung vorliegen. Für voneinander verschiedene Substituenten erhöht sich die Zahl der möglichen Stellungsisomeren beträchtlich. Für die Anwendung im Rahmen der Erfindung ist eine Isomerentrennung der Phthalocyanin-Farbabspalter oder ihrer Vorprodukte nicht vonnöten. Ob sich die Substituenten am Phthalocyanin ganz oder überwiegend in 3- oder in 4-Stellung befinden, läßt sich über die Synthesewege steuern; dies ist literaturbekannt. Für die fotografische Verwendung im Rahmen der Erfindung werden Farbabspalter bevorzugt, bei denen die Anknüpfung überwiegend über die 3-Positionen der Benzolringe des Phthalocyaninsystems erfolgt. Die Ausgangsverbindungen hierfür erhält man durch Chlorsulfonylierung von MPc mit Chlorsulfonsäure, gegebenenfalls in Kombination mit Thionylchlorid. Auch dies ist literaturbekannt.

Die als Reaktionspartner geeigneten aminmodifizierten chinoiden Trägerreste der Formel (II) erhält man durch Umsetzung der entsprechenden Aminobenzolsulfinsäuren mit carbinolmodifizierten Hydrochinonen der Formel (IV).

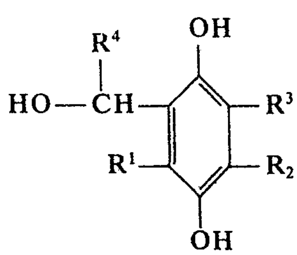

(IV)

Verbindungen der Formel (IV) sind in der veröffentlichten europäischen Patentanmeldung 0 004 399 beschrieben. Die Umsetzung der Aminobenzolsulfinsäuren mit Verbindungen der Formel (IV) wird durch Lewis-Säuren oder Protonensäuren katalysiert und verläuft in Ausbeuten von 75 bis 100% bei Temperaturen zwischen 20 und 100°C, vorzugsweise zwischen 50 und 70°C. Als Lösungsmitel wird Essigsäure, gegebenenfalls im Gemisch mit nicht-protischen Lösungsmitteln, bevorzugt. Das Lösungsmittel kann wasserhaltig sein. Für die nachfolgende Oxidation zum Chinon der Formel (II) können beliebige Oxidationsmittel verwendet werden, soweit sie mit der Aminogruppe nicht reagieren.

Selbstverständlich sind die nach dem beschriebenen Herstellungsverfahren zugänglichen erfindungsgemäßen Phthalocyanin-Farbabspalter nicht streng einheitlich. Es handelt sich aber um Gemische mit überraschend hoher Einheitlichkeit, insbesondere was die Anzahl der chinoiden Trägerreste pro Phthalocyanineinheit betrifft. Im wesentlichen liegen Isomerengemische vor; an die bereits diskutierten Isomeriemöglichkeiten wird erinnert. Die Anteile an Farbabspaltern mit höherem lipophilem Anteil (3 oder mehr chinoide Trägerreste) und solchen mit höherem Sulfonatgruppenanteil (ein chinoider Trägerrest) sind unerwartet niedrig.

Die Anteile der mit dem Index p erfaßten nicht-hydrophobierenden Sulfamoylgruppen sind statistische Größen, deren Bedeutung im wesentlichen in der Löslichkeit der Farbabspalter in hydrophoben Lösungsmitteln mittlerer Dielektrizitätskonstante, z. B. in Estern, Ketonen, chlorierten Kohlenwasserstoffen, zum Ausdruck kommt.

### Herstellung der Verbindung 1

a) 2,3-Dimethyl-5-propyl-6-$\alpha$-(p-aminobenzolsulfonyl)-tetradecylbenzochinon-1,4

Zu einer gerührten Mischung aus 10,2 g (0,065 Mol) p-Aminobenzolsulfinsäure, 19,6 g (0,05 Mol) 2,3-Dimethyl-5-propyl-6-$\alpha$-hydroxytetradecylhydrochinon, dessen Herstellung in der veröffentlichten europäischen Patentanmeldung 0 004 399 beschrieben ist, 300 ml Eisessig und 30 ml Wasser wurden 3 ml konzentrierte Schwefelsäure getropft. Der Ansatz wurde unter fortwährendem Rühren auf 60°C gebracht und 15 Minuten auf dieser Temperatur gehalten. Dann wurden 30 g (0,11Mol) $FeCl_3$. 6 $H_2O$ zugegeben. Nach weiteren 15 Minuten Rühren bei 60°C wurden 300 ml Wasser zugegeben. Das Gemisch wurde 1 Stunde bei 60°C gerührt, auf Raumtemperatur gekühlt und abgesaugt. Der mit 800 ml Wasser gewaschene und anschließend getrocknete Rückstand wog 25,8 g. Er wurde in 200 ml Methanol aufgekocht, abgekühlt, abgesaugt, mit 100 ml Methanol gewaschen und erneut getrocknet. Ausbeute 20,2 g = 76% der Theorie.

b) Verbindung 1

3,9 g (0,004 Mol) gut getrocknetes Kupferphthalocyanintetrasulfochlorid wurden in 80 ml wasserfreiem Pyridin zusamen mit 2 g (0,004 Mol) des unter a) erhaltenen Produktes unter gutem Rühren und Wasserausschluß auf 50 bis 55°C erwärmt und 4 Stunden in diesem Temperaturbereich gehalten. Die von Ungelöstem abgesaugte Reaktionslösung wurde mit 10 ml Wasser 5 Minuten lang im Dampfbad erwärmt, auf Zimmertemperatur gekühlt, im Volumenverhältnis 1 : 1 mit Wasser versetzt und langsam mit konzentrierter Salzsäure angesäuert. Der dabei erhaltene sehr feine Niederschlag wurde abgesaugt, mit Wasser gewaschen, auf Ton getrocknet, mit heißem Methanol verrührt, wieder abgesaugt und an Luft getrocknet. Das Präparat (2 g = 54% der Theorie) hatte nach Elementaranalyse die für Verbindung 1 erwartete Bruttozusammensetzung. Dünnschichtchromatographisch erweist sich das Produkt als fast einheitliche Substanz (Isomerengemisch). Die analoge Verbindung mit nur einem chinoiden Trägerrest fehlt zur Gänze und die analogen Verbindungen mit 3 oder mehr chinoiden Trägerresten tragen nicht mehr als 5% zum Produkt bei. Verbindung 1 ist leicht löslich in Dichlormethan, nicht aber in Ethylacetat.

### Herstellung der Verbindung 2

Der für die Herstellung der Verbindung 2 erforderliche aminogruppenmodifizierte chinoide Trägerrest 2,3-Dimethyl-5-propyl-6-$\alpha$-(2-methyl-5-aminobenzolsulfonyl)-tetradecylbenzochinon-1,4 wurde in analoger Weise nach der oben unter 1a) angegebenen Vorschrift hergestellt. 2 g (0,004 Mol) dieser Verbindung und 1,3 ml (0,016 Mol) Pyridin wurden zu einer Lösung von 2 g (0,002 Mol) gut getrocknetem Kupferphthalocyanintetrasulfochlorid in 60 ml Dichlormethan zugefügt. Die Mischung wurde bei Raumtemperatur unter Wasserausschluß ca. 4 Stunden lang gerührt. Danach ließ sich in einem Dünnschichtchromatogramm mit 4-Dimethylaminozimtaldehyd kein primäres aromatisches Amin mehr nachweisen. Das Reaktionsgemisch wurde in 300 ml Methanol eingerührt und abgesaugt. Der Filterrückstand wurde zur Hydrolyse der restlichen Sulfochloridgruppen unter Erwärmen in wasserhaltigem Pyridin gelöst. Durch Fällen aus der wieder abgekühlten Lösung mit Wasser und konzentrierter Salzsäure (bis zur schwach sauren Reaktion), Absaugen, Verrühren des Rückstandes in Methanol, erneutes Absaugen und Trocknen wurden 2,5 g (66% d. Th.) eines Produkts gewonnen, dessen dünnschichtchromatographisches Verhalten demjenigen von Verbindung 1 vollkommen analog war. Verbindung 2 ist leicht löslich in Dichlormethan, nicht dagegen in Ethylacetat.

### Herstellung der Verbindung 3

2 g (0,002 Mol) gut getrocknetes Kupferphthalocyanintetrasulfochlorid wurden in 40 ml Dichlormethan gelöst und mit 2 g (0,004 Mol) des zur Herstellung der Verbindung 2 verwendeten aminogruppenmodifizierten chinoiden Trägerrestes und 1,3 ml Pyridin im geschlossenen Gefäß 2 Stunden lang bei

Raumtemperatur gerührt. Dann wurden 0,4 ml (0,006 Mol) getrocknetes und destilliertes Ethanolamin und weitere 1,3 ml Pyridin zugegeben. Nach weiteren 30 Minuten Reaktionszeit wurde das Gemisch langsam in 400 ml Methanol eingerührt, einige Minuten zum Sieden erhitzt, abgekühlt und abgesaugt. Der mit Methanol gewaschene und getrocknete Filterrückstand wog 2,7 g. Er erwies sich analytisch als Verbindung 3 mit je etwa 10%igen Anteilen der Verbindungen 2 und 4 (jeweils Isomerengemische). Das Präparat ist nicht nur in Dichlormethan, sondern auch in Ethylacetat gut löslich.

Herstellung des nicht erfindungsgemäßen Präparats D

2 g (0,002 Mol) gut getrocknetes Kupferphthalocyanintetrasulfochlorid wurden in 50 ml Dichlormethan gelöst und mit 4 g (0,008 Mol) des für die Herstellung der Verbindung 2 verwendeten aminogruppenmodifizierten Chinonderivates und 2 ml (0,025 Mol) Pyridin im verschlossenen Gefäß ca. 18 Stunden lang bei Raumtemperatur gerührt. Danach ergab sich dünnschichtchromatographisch nur noch eine schwache aromatische Aminreaktion, d. h. das aminogruppenmodifizierte Benzochinonderivat war zum größten Teil umgesetzt. Aufarbeitung wie bei der Herstellung von Verbindung 2 angegeben ergab 3,8 g eines Farbstoffpräparates, das nach Ausweis der Elementaranalyse durchschnittlich 3,5 chinoide Trägerreste pro Phthalocyanineinheit enthielt. Dünnschichtchromatographisch wurden zwei Komponenten (jeweils Isomerengemische) ermittelt, die den Farbabspaltern mit 3 bzw. 4 chinoiden Trägerresten zugeordnet wurden.

Die erfindungsgemäßen Phthalocyaninverbindungen sind blaugrün gefärbt. Sie sind geeignet als Farbabspalter für die Erzeugung des blaugrünen Teilbildes in farbfotografischen Aufzeichnungsmaterialien. Derartige Materialien enthalten als lichtempfindliches Element üblicherweise ein Laminat aus 3 oder mehr lichtempfindlichen Silberhalogenidemulsionsschichten unterschiedlicher Sensibilisierung und gegebenenfalls weitere nicht-lichtempfindliche Schichten, wobei den lichtempfindlichen Silberhalogenidemulsionsschichten Farbabspalter für die Erzeugung der einzelnen Teilbilder Gelb, Purpur und Blaugrün zugeordnet sind und wobei für die Erzeugung des blaugrünen Teilbildes erfindungsgemäß Farbabspalter der Formel (I) (q = 0) zur Anwendung gelangen.

Die erfindungsgemäßen Farbabspalter sind reduzierbare nicht-diffundierende farbgebende Verbindungen, die in reduzierter Form unter den alkalischen Entwicklungsbedingungen einen diffusionsfähigen Phthalocyaninfarbstoff in Freiheit setzen. Verbindungen dieses Typs werden wie in der veröffentlichten europäischen Patentanmeldung 0 004 399 beschrieben gemeinsam mit ED-Verbindungen verwendet, die ihrerseits Reduktionsmittel darstellen und bei der Entwicklung durch Reaktion mit belichtetem Silberhalogenid oder mit bildmäßig erzeugten Oxidationsprodukten von Hilfsentwicklerverbindungen bildmäßig durch Oxidation verbraucht werden. Durch die verbleibende bildmäßige Verteilung an nicht verbrauchter ED-Verbindung wird der Farbabspalter bildmäßig reduziert und zur Freisetzung des diffusionsfähigen Farbstoffs veranlaßt. Um diese Wirkungsweise in optimaler Form sicherzustellen, ist jeweils einer lichtempfindlichen Silberhalogenidemulsionsschicht eine Kombination aus Farbabspalter und ED-Verbindung zugeordnet und andererseits durch geeignete Maßnahmen, vorzugsweise durch zwischen den lichtempfindlichen Schichten angeordnete Trennschichten, dafür Sorge getragen, daß derartige Zuordnungen räumlich und funktionell voneinander getrennt bleiben. Die Zuordnung zwischen Farbabspalter und lichtempfindlicher Silberhalogenidemulsionsschicht ist meist von solcher Art, daß die Bildfarbe des aus dem Farbabspalter freigesetzten Bildfarbstoffes komplementär ist zu der Spektralfarbe, für die die zugeordnete Silberhalogenidemulsionsschicht eine maximale Empfindlichkeit aufweist.

Unter »Zuordnung« und »zugeordnet« ist zu verstehen, daß die gegenseitige Anordnung von Silberhalogenidemulsionsschicht, nicht-diffundierender farbgebender Verbindung und nicht oder nur wenig diffundierender ED-Verbindung von solcher Art ist, daß eine Wechselwirkung zwischen ihnen möglich ist, die eine bildgemäße Übereinstimmung zwischen gebildetem Silberbild und bildmäßiger Verteilung des Oxidationsproduktes der ED-Verbindung einerseits und bildmäßiger Verteilung der bei der Silberhalogenidentwicklung nicht-oxidierten ED-Verbindung und bildmäßiger Verteilung an freigesetztem diffusionsfähigem Farbstoff andererseits zuläßt. Dies kann beispielsweise dadurch erreicht werden, daß Farbabspeicher und ED-Verbindung in der gleichen Schicht enthalten sind, möglichst in der zugeordneten lichtempfindlichen Silberhalogenidemulsionsschicht oder in einer hierzu benachbarten nicht lichtempfindlichen Bindemittelschicht.

Obwohl für die Einarbeitung der erfindungsgemäßen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Dies bietet u. a. auch den Vorteil, daß Farbabspalter und ED-Verbindung in Form eines gemeinsamen Emulgates in besonders engen funktionellen Kontakt gebracht werden können. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und der ED-Verbindung können durch einfache routinemäßige Tests ermittelt werden. Der Farbabspalter der vorliegenden Erfindung wird beispielsweise in Mengen von 0,05—0,2 Mol und die ED-Verbindung in Mengen von 0,1—0,6 Mol pro Mol Silberhalogenid verwendet. Naturgemäß ist die auf den Farbabspalter bezogene molare

Menge an ED-Verbindung höher als üblich, da die erfindungsgemäßen Farbabspalter über zwei abspaltbare chinoide Trägerreste verfügen.

Die Entwicklung des bildmäßig belichteten erfindungsgemäßen farbfotografischen Aufzeichnungsmaterials wird durch Behandlung mit einer wäßrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemäßen farbfotografischen Aufzeichnungsmaterials enthalten sein. Bei der Entwicklung werden aus den Farbabspaltern bildmäßig diffusionsfähige Farbstoffe freigesetzt und auf eine Bildempfangsschicht übertragen, die entweder integraler Bestandteil des erfindungsgemäßen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger.

Sie besteht im wesentlichen aus einem Bindemittel, das Beizmittel für die Festlegung der aus den nicht-diffundierenden Farbabspaltern freigesetzten diffundierenden Farbstoffe enthält. Als Beizmittel für anionische Farbstoffe dienen vorzugsweise langkettige quaternäre Ammonium- oder Phosphoniumverbindungen oder tertiäre Sulfoniumverbindungen, z. B. solche, wie sie beschrieben sind in US 3 271 147 und US 3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-2 315 304, DE-A-2 631 521 oder in der DE-A-2 941 818 beschrieben sind. Die Farbstoffbeizmittel sind in der Beizmittelschicht in einem der üblichen hydrophilen Bindemittel dispergiert, z. B. in Gelatine, Polyvinylpyrrolidon, ganz oder partiell hydrolysierten Celluloseestern. Selbstverständlich können auch manche Bindemittel als Beizmittel fungieren, z. B. Mischpolymerisate oder Polymerisatgemische von Vinylalkohol und N-Vinylpyrrolidon, wie beispielsweise beschrieben in der DE-B- 1 130 284, ferner solche, die Polymerisate von stickstoffhaltigen quaternären Basen darstellen, z. B. Polymerisate von N-Methyl-2-vinylpyridin, wie beispielsweise beschrieben in US-A-2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in der DE-A- 2 009 498. Im allgemeinen wird man jedoch den zuletzt genannten beizenden Bindemitteln andere Bindemittel, z. B. Gelatine, zusetzen.

Das bei der Entwicklung des erfindungsgemäßen farbfotografischen Materials erzeugte Farbbild besteht aus einer bildmäßigen Verteilung des aus den erfindungsgemäßen Farbabspaltern freigesetzten Phthalocyaninfarbstoffes der Formel (I) ($q=1$) sowie gegebenenfalls weiterer Farbstoffe, die in der Bildempfangsschicht mittels der darin enthaltenen Beizmittel festgelegt sind. Entsprechend der Formel (I) ($q=1$) verfügen die freigesetzten Phthalocyaninfarbstoffe über 2 Sulfinatgruppen sowie gegebenenfalls über weitere anionische Gruppen in Form von Sulfonatgruppen in einer durch die Indexzahl p festgelegten Anzahl. Über die vorhandenen anionischen Gruppen werden diese Farbstoffe vermutlich an die kationischen Gruppen des Beizmittels in der Bildempfangsschicht gebunden.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als optisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muß entweder der Schichtträger transparent sein, so daß das erzeugte Farbübertragsbild durch ihn hindurch betrachtet werden kann, oder das lichtempfindliche Element muß mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmäßigerweise durch den transparenten Schichtträger vorgenommen wird.

## Beispiel 1
(nicht erfindungsgemäß)

### Lichtempfindliches Element

Auf einen beidseitig mit Polyethylen beschichteten Papierträger wurden nacheinander folgende Schichten aufgetragen. Alle Angaben beziehen sich auf 1 $m^2$.

1. Eine rotsensibilisierte Silberbromidiodidemulsionsschicht aus 0,5 g $AgNO^3$ mit 0,3 g des nicht erfindungsgemäßen Farbabspalters A (= Verbindung 2 aus DE-A-2 854 946), 0,16 g ED-Verbindung B (= Verbindung 4 aus EP-A-0 034 749), 0,46 g Palmitinsäurediethylamid (gemeinsamer Öl-

bildner für A und B) und 1,15 g Gelatine.

2. Eine Schutzschicht mit 0,6 g Monoacetylierungsprodukt von 4-Methyl-4-hydroxymethylphenidon, 0,12 g 2-Isooctadecyl-5-sulfohydrochinon und 0,6 g Gelatine.
3. Eine Härtungsschicht mit 0,1 g Gelatine und 0,12 g Härtungsmittel C.

Bildempfangsblatt

Auf einem beidseitig mit Polyethylen beschichteten Papierträger wurden folgende Schichten aufgetragen. Die Angaben beziehen sich auf 1 $m^2$.

1. Eine Beizschicht mit 6 g eines Polyurethans gemäß Beispiel 3 der DE-A-2 631 521 und 5 g Gelatine.
2. Eine Härtungsschicht mit 0,1 g Gelatine und 0,15 g Härtungsmittel C.

Das bildmäßig belichtete lichtempfindliche Element und das Bildempfangsblatt wurden mit einer Behandlungslösung der nachfolgend angegebenen Zusammensetzung getränkt und schichtseitig zusammengepreßt:

| | |
|---|---|
| 925 g | $H_2O$ |
| 30 g | Isobutanol |
| 2 g | $Na_2SO_3$ |
| 3 g | KBr |
| 40 g | KOH |

Nach einer Kontaktzeit von 2 Minuten wurden die Blätter voneinander getrennt und das Bildempfangsblatt 30 Sekunden gewässert. Nach der Trocknung wurden die Dmin/Dmax-Werte des positiven blaugrünen Bildes gemessen.

Beispiele 2 bis 6
(erfindungsgemäß)

Es wurde verfahren wie in Beispiel 1 angegeben, wobei jedoch anstelle des dort beschriebenen lichtempfindlichen Elementes solche verwendet wurden, die als Farbabspalter 0,6 g einer der Verbindungen 1, 3, 5, 7 und 14 sowie die ED-Verbindung B in einer Menge von 0,48 g enthielten. Als Ölbildner für die ED-Verbindung und den Farbabspalter wurden jeweils 1,08 g Palmitinsäurediethylamid verwendet.

Beispiel 7

Es wurde verfahren wie in Beispiel 1 angegeben, wobei jedoch als Farbabspalter ein nicht erfindungsgemäßes Phthalocyaninpräparat (Präparat D) verwendet wurde, das im Durchschnitt 3,5 chinoide Trägerreste und 0,5 Sulfogruppen pro Phthalocyanineinheit enthielt, wobei die chinoiden Trägerreste identisch waren mit denjenigen der Verbindungen 2 bis 22. 0,85 g Präparat D und 0,65 g ED-Verbindung B wurden mit 1,49 g Palmitinsäurediethylamid emulgiert.

Die mit den lichtempfindlichen Elementen der Beispiele 1 bis 7 erzielten Dmin- und Dmax-Werte, die Empfindlichkeit und die Lichtechtheit sind in der folgendenTabelle dargestellt. Die Empfindlichkeit E ist in relativen log I · t-Einheiten angegeben (gemessen bei Dichte 0,6; 30 Einheiten entsprechen einer Blende). In der sechsten Spalte ist als »ΔE« die Abweichung von der durchschnittlichen Empfindlichkeit der Beispiele 2 bis 6 in relativen log I · t-Einheiten angegeben:

$$»\Delta E« = E - \frac{1}{5} \sum_{\text{Beisp. 2}}^{\text{Beisp. 6}} E$$

Zur Ermittlung der Lichtechtheit wurden die nach den Beispielen 1 bis 7 erhaltenen Farbbilder 48 Stunden in einem Xenotestgerät bestrahlt ($4{,}8 \cdot 10^6$ lux · h); die prozentuale Dichteabnahme ist in der letzten Spalte der Tabelle angegeben.

| Beispiel | Verbindung | Dmin | Dmax | E [rel. log. I. t] | »$\Delta$ E« | $\frac{\Delta D}{D_0}$ [%] |
|---|---|---|---|---|---|---|
| 1 | A | 0,19 | 2,09 | 180 | +67 | −81 |
| 2 | 1 | 0,25 | 1,95 | 115 | + 2 | −15 |
| 3 | 3 | 0,20 | 2,05 | 120 | + 7 | −15 |
| 4 | 5 | 0,21 | 1,95 | 101 | −12 | −17 |
| 5 | 7 | 0,14 | 1,80 | 110 | − 3 | −17 |
| 6 | 14 | 0,25 | 2,05 | 119 | + 6 | −18 |
| 7 | D | 0,19 | 1,95 | 90 | −23 | −20 |

Aus der Tabelle ist ersichtlich, daß die erfindungsgemäßen Phthalocyanin-Farbabspalter hinsichtlich der erzielten Dmin- und Dmax-Werte gleichwertig sind mit den bekannten Farbabspaltern, die als Farbstoffrest einen 4-(4-Nitrophenylazo)-naphtholrest enthalten.

Das Molverhältnis von Farbabspalter zu ED-Verbindung betrug in

| | |
|---|---|
| Beispiel 1 | 1 : 1 |
| Beispielen 2—6 | 1 : 3 |
| Beispiel 7 | 1 : 4 |

Der Empfindlichkeitsabstand der Beispiele 2 bis 6 zu Beispiel 1 ist aus der hypsochrom verschobenen Absorption des 4-(4-Nitrophenylazo)-naphtholchromophors zu erklären; es handelt sich hier im Gegensatz zu den Phthalocyaninfarbstoffen um einen sogenannten »verschobenen Bildfarbstoff« (»shifted dye«). Durch Einbettung des erfindungsgemäßen Farbabspalters in eine zu der lichtempfindlichen Schicht benachbarte Bindemittelschicht läßt sich ebenfalls die Empfindlichkeit verbessern. Hinsichtlich der Lichtechtheit ist der erfindungsgemäße Farbabspalter dem bekannten eindeutig überlegen, ebenso in der Brillanz des freigesetzten Bildfarbstoffes.

Überraschend ist der Befund, daß die erfindungsgemäßen Farbabspalter schleierfreie Farbdichten liefern, die mit denjenigen der bekannten Azofarbstoff-Farbabspalter vergleichbar sind, ohne daß der Silberauftrag entsprechend dem durch die doppelte Anzahl an chinoiden Trägerresten pro Farbstoffmolekül bedingten höheren Gehalt an ED-Verbindung erhöht werden müßte. In dem nicht erfindungsgemäßen Beispiel 7 wird ein gravierender Empfindlichkeitsverlust beobachtet, der nur durch Erhöhung des Silberauftrags wettgemacht werden könnte.

Formelanhang zu den Beispielen 1 bis 7

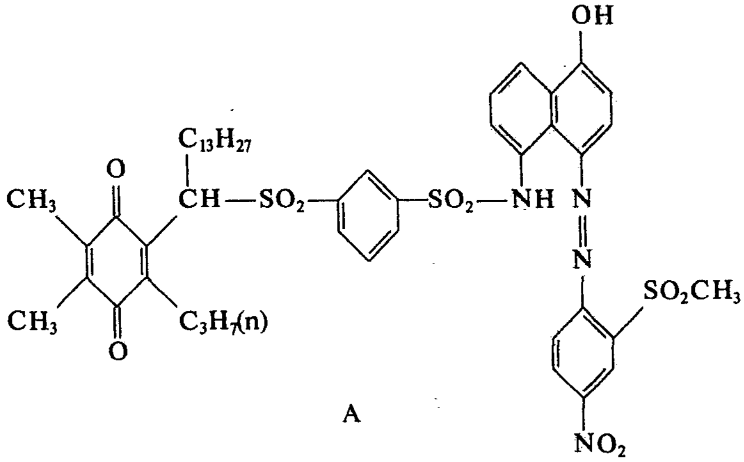

A

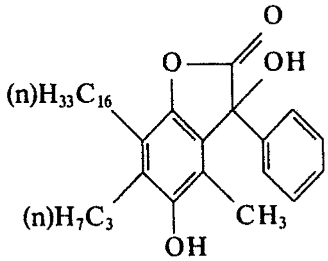

B

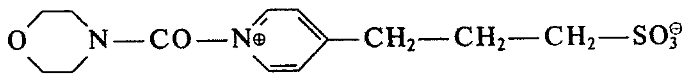

C

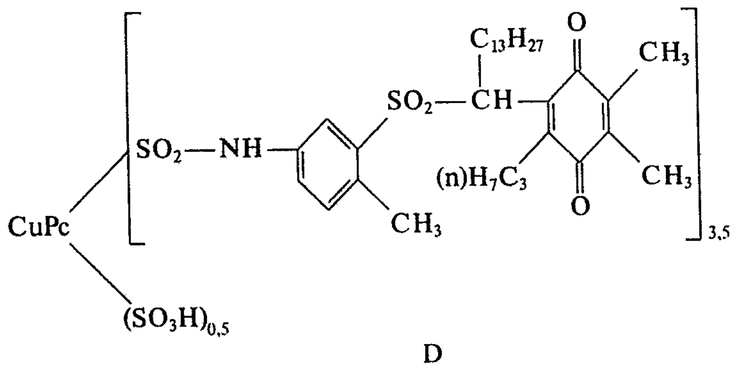

D

**Patentansprüche**

1. Verbindung der Formel

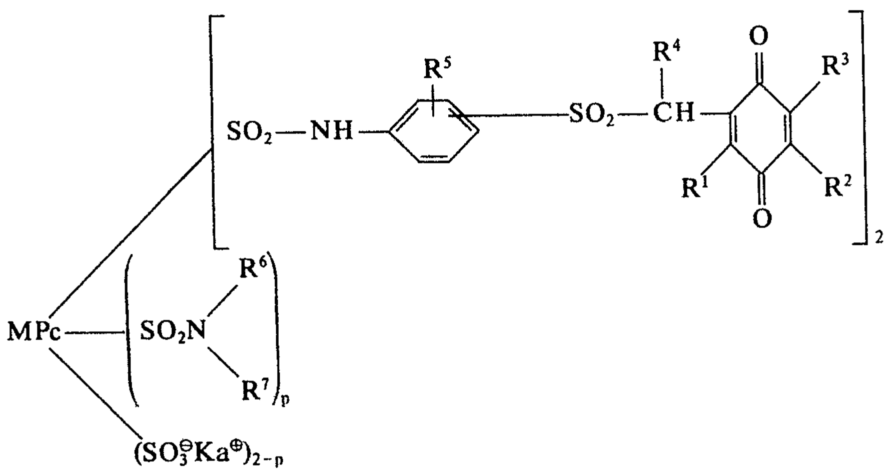

(I)

worin bedeuten

MPc einen tetravalenten Phthalocyaninrest der Formel

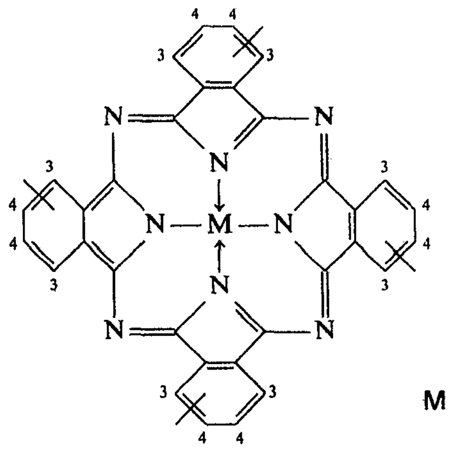

M = 2 H, Ni oder Cu

$R^1$, $R^2$, $R^3$ Wasserstoff, Halogen, Alkyl, Alkoxy, Aryl oder Acylamino oder $R^2$ und $R^3$ vervollständigen einen ankondensierten Ring,

$R^4$ Wasserstoff oder Alkyl;

$R^5$ Wasserstoff, Halogen oder Alkyl, Alkoxy oder Acylamino mit jeweils bis zu 4 C-Atomen,

$R^6$, $R^7$ Wasserstoff oder gegebenenfalls substituiertes Alkyl, Alkenyl, gegebenenfalls substituiertes Aryl oder $R^6$ und $R^7$ zusammen den zur Vervollständigung eines gesättigten 5- oder 6gliedrigen Ringes erforderlichen Rest, wobei $R^6$ und $R^7$ zusammen nicht mehr als 7 C-Atome enthalten,

$Ka^{\oplus}$ ein Kation,

p = 0, 1 oder 2,

wobei mindestens einer der Reste $R^1$, $R^2$, $R^3$ und $R^4$ einen diffusionsfest machenden Rest enthält.

2. Verbindung nach Anspruch 1, dadurch gekennzeichnet, daß $R^1$, $R^2$ und $R^3$ in einem chinoiden Trägerrest zusammen nicht mehr als 8 C-Atome enthalten und $R^4$ ein Alkylrest mit mindestens 11 C-Atomen ist.

3. Verbindung nach Anspruch 1, dadurch gekennzeichnet, daß $R^1$ n-Propyl, $R^2$ und $R^3$ Methyl bedeuten.

4. Verbindung nach Anspruch 1, dadurch gekennzeichnet, daß $R^5$ Methyl, Methoxy, Acetamido oder Methylsulfonamido bedeutet.

5. Farbfotografisches Aufzeichnungsmaterial für die Herstellung farbiger Bilder nach dem Farbdiffusionsübertragungsverfahren, das zugeordnet zu einer lichtempfindlichen Silberhalogenidemulsionsschicht eine nicht-diffundierende reduzierbare farbgebende Verbindung, die in reduzierter Form einen diffusionsfähigen blaugrünen Bildfarbstoff freisetzt, sowie ein Reduktionsmittel (ED-Verbindung) für die farbgebende Verbindung enthält, dadurch gekennzeichnet, daß es als farbgebende Verbindung eine Verbindung der folgenden Formel enthält:

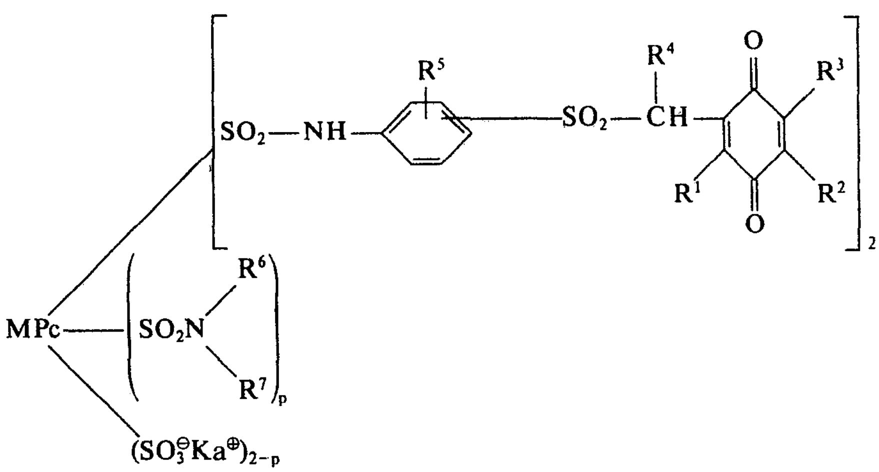

(I)

worin bedeuten

MPc einen tetravalenten Phthalocyaninrest der Formel

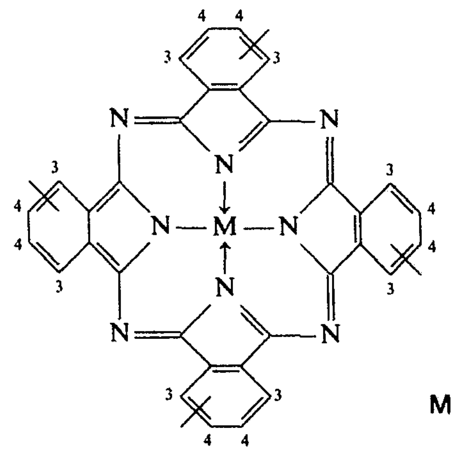

M = 2 H, Ni oder Cu

$R^1$,$R^2$,$R^3$ Wasserstoff, Halogen, Alkyl, Alkoxy, gegebenenfalls substituiertes Aryl oder Acylamino, oder $R^2$ und $R^3$ vervollständigen einen ankondensierten Ring,

$R^4$ Wasserstoff oder Alkyl,

$R^5$ Wasserstoff, Halogen oder Alkyl, Alkoxy oder Acylamino mit jeweils bis zu 4 C-Atomen,

$R^6$, $R^7$ Wasserstoff oder gegebenenfalls substituiertes Alkyl, Alkenyl, gegebenenfalls substituiertes Aryl oder $R^6$ und $R^7$ zusammen den zur Vervollständigung eines gesättigten 5- oder 6gliedrigen Ringes erforderlichen Rest, wobei $R^6$ und $R^7$ zusammen nicht mehr als 7 C-Atome enthalten,

$Ka^{\oplus}$ ein Kation,

p = 0, 1 oder 2,

wobei mindestens einer der Reste $R^1$, $R^2$, $R^3$ und $R^4$ einen diffusionsfest machenden Rest enthält.

6. Aufzeichnungsmaterial nach Anspruch 5, dadurch gekennzeichnet, daß $R^1$, $R^2$ und $R^3$ in einem chinoiden Trägerrest zusammen nicht mehr als 8 C-Atome enthalten und $R^4$ ein Alkylrest mit mindestens 11 C-Atomen ist.

7. Aufzeichnungsmaterial nach Anspruch 5, dadurch gekennzeichnet, daß $R^1$ n-Propyl, $R^2$ und $R^3$ Methyl bedeuten.

8. Aufzeichnungsmaterial nach Anspruch 5, dadurch gekennzeichnet, daß $R^5$ Methyl, Methoxy, Acetamido oder Methylsulfonamido bedeutet.

9. Fotografisch hergestelltes Farbbild, bestehend aus einer auf einem Schichtträger angeordneten Bildempfangsschicht mit einer kationischen Beize und einer darin enthaltenen bildmäßigen Verteilung eines blaugrünen Bildfarbstoffes, dadurch gekennzeichnet, daß als Bildfarbstoff eine anionische Verbindung der folgenden Formel enthalten ist:

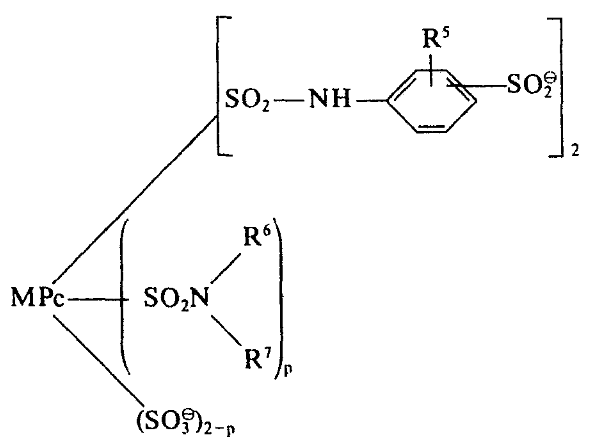

(I)

worin bedeuten

MPc einen tetravalenten Phthalocyaninrest der Formel

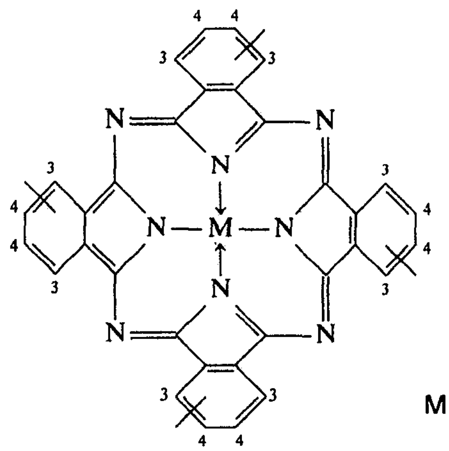

M = 2 H, Ni oder Cu

$R^5$ Wasserstoff, Halogen oder Alkyl, Alkoxy oder Acylamino mit jeweils bis zu 4 C-Atomen,

$R^6$, $R^7$ Wasserstoff oder gegebenenfalls substituiertes Alkyl, Alkenyl, gegebenenfalls substituiertes Aryl oder $R^6$ und $R^7$ zusammen den zur Vervollständigung eines gesättigten 5- oder 6gliedrigen Ringes erforderlichen Rest, wobei $R^6$ und $R^7$ zusammen nicht mehr als 7 C-Atome enthalten,

P 0, 1 oder 2.

10. Farbbild nach Anspruch 9, dadurch gekennzeichnet, daß $R^5$ Methyl, Methoxy, Acetamido oder Methylsulfonamido bedeutet.

**Claims**

1. Compound of the formula

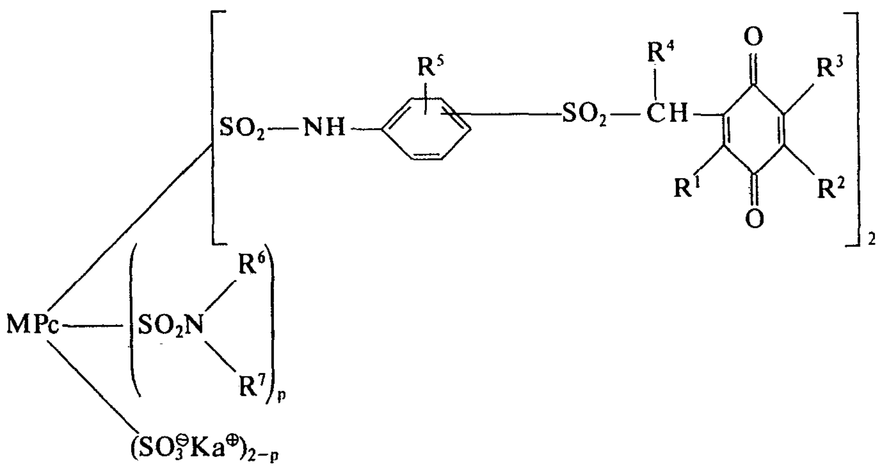

(I)

wherein

MPc denotes a tetravalent phthalocyanide radical of the formula

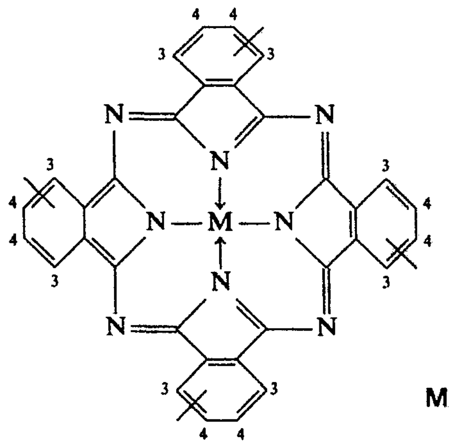

M = 2H, Ni or Cu

$R^1$, $R^2$ and $R^3$ denote hydrogen, halogen, alkyl, alkoxy, aryl, or acylamino, or $R^2$ and $R^3$ complete a condensed ring,

$R^4$ denotes hydrogen or alkyl;

$R^5$ denotes hydrogen, halogen or alkyl, alkoxy or acylamino each with up to 4 C atoms,

$R^6$ and $R^7$ denote hydrogen or optionally substituted alkyl, alkenyl, optionally substituted aryl or $R^6$ and $R^7$ together denote the radical necessary to complete a saturated 5- or 6-membered ring, $R^6$ and $R^7$ together containing no more than 7 C atoms,

$Ka^{\oplus}$ denotes a cation and

p = 0, 1 or 2,

at least one of the radicals $R^1$, $R^2$, $R^3$ and $R^4$ containing a radical conferring diffusion resistance.

2. Compound according to Claim 1, characterised in that $R^1$, $R^2$ and $R^3$ in a quinoid carrier radical together contain no more than 8 C atoms and $R^4$ is an alkyl radical with at least 11 C atoms.

3. Compound according to Claim 1, characterised in that $R^1$ denotes n-propyl, and $R^2$ and $R^3$ denote methyl.

4. Compound according to Claim 1, characterised in that $R^5$ denotes methyl, methoxy, acetamido or methylsulphonamido.

5. Colour photographic recording material for the production of coloured images by the dye diffusion transfer process, which contains in association with a light-sensitive silver halide emulsion layer a non-diffusing reducible colour-providing compound which, in reduced form, liberates a diffusible cyan image dye, as well as a reducing agent (ED compound) for the colour-providing compound, characterised in that it contains as the colour-providing compound a compound of the following formula:

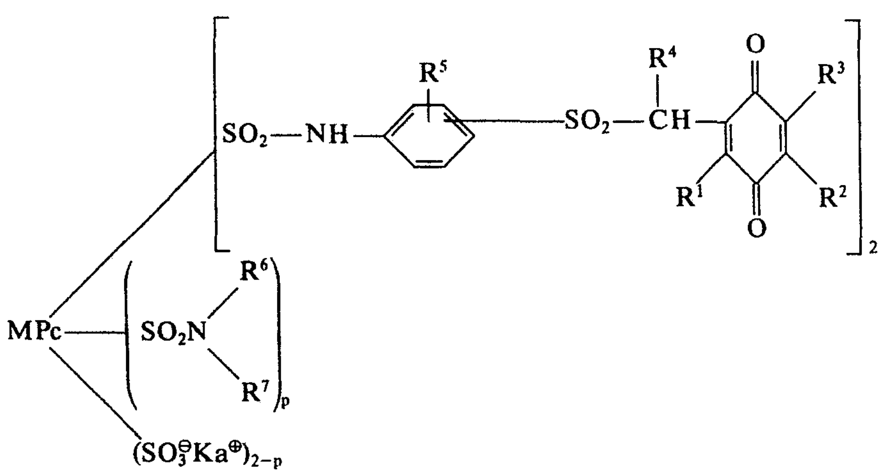

wherein

MPc denotes a tetravalent phthalocyanine radical of the formula

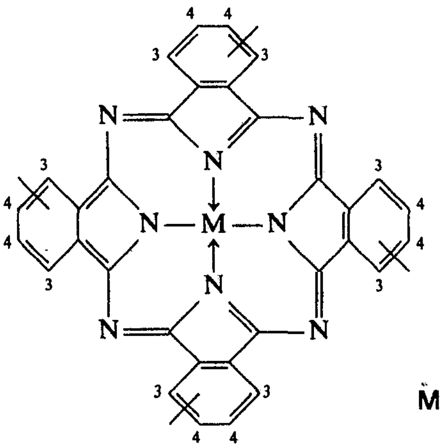

M = 2 H, Ni or Cu

$R^1$, $R^2$ and $R^3$ denote hydrogen, halogen, alkyl, alkoxy, optionally substituted aryl or acylamino, or $R^2$ and $R^3$ complete a condensed ring,

$R^4$ denotes hydrogen or alkyl,

$R^5$ denotes hydrogen, halogen or alkyl, alkoxy or acylamino each with up to 4 C atoms,

$R^6$ and $R^7$ denote hydrogen or optionally substituted alkyl, alkenyl, optionally substituted aryl or $R^6$ and $R^7$ together denote the radical necessary to complete a saturated 5- or 6-membered ring, $R^6$ and $R^7$ together containing no more than 7 C atoms,

$Ka^{\oplus}$ denotes a cation and

p = 0, 1 or 2,

at least one of the radicals $R^1$, $R^2$, $R^3$ and $R^4$ containing a radical conferring diffusion resistance.

6. Recording material according to Claim 5, characterised in that $R^1$, $R^2$ and $R^3$ in a quinoid carrier radical together contain no more than 8 C atoms and $R^4$ is an alkyl radical with at least 11 C atoms.

7. Recording material according to Claim 5, characterised in that $R^1$ denotes n-propyl, and $R^2$ and $R^3$ denote methyl.

8. Recording material according to Claim 5, characterised in that $R^5$ denotes methyl, methoxy, acetamido or methylsulphonamido.

9. Photographically produced colour image consisting of an image-receiving layer arranged on a layer support with a cationic mordant and an image-wise distribution of a cyan image dye contained therein, characterised in that an anionic compound of the following formula is contained as the image dye:

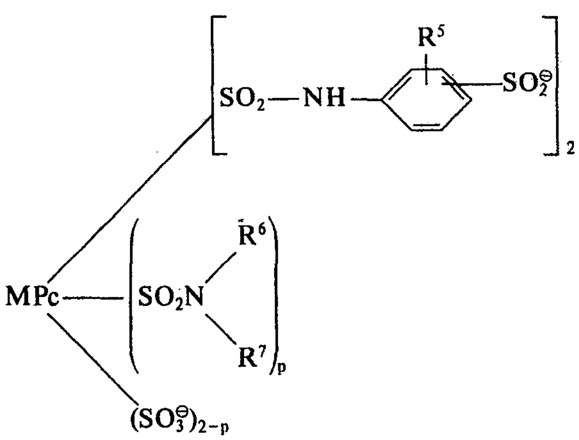

(I)

wherein

MPc denotes a tetravalent phthalocyanide radical of the formula

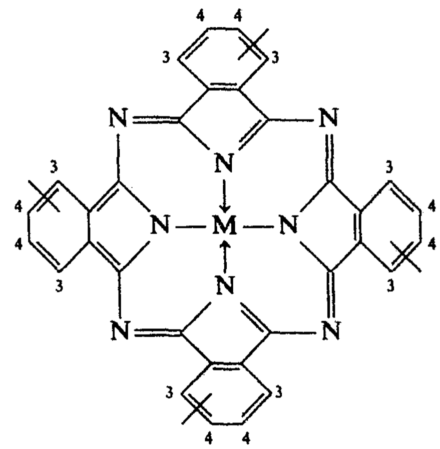

M = 2 H, Ni or Cu

$R^5$ denotes hydrogen, halogen or alkyl, alkoxy or acylamino each with up to 4 C atoms,

$R^6$ and $R^7$ denote hydrogen or optionally substituted alkyl, alkenyl, optionally substituted aryl or $R^6$ and $R^7$ together denote the radical necessary to complete a saturated 5- or 6-membered ring, $R^6$ and $R^7$ together containing no more than 7 C atoms, and

p denotes 0, 1 or 2.

10. Coloured image according to Claim 9, characterised in that $R^5$ denotes methyl, methoxy, acetamido or methylsulphonamido.

## Revendications

1. Composé de formule:

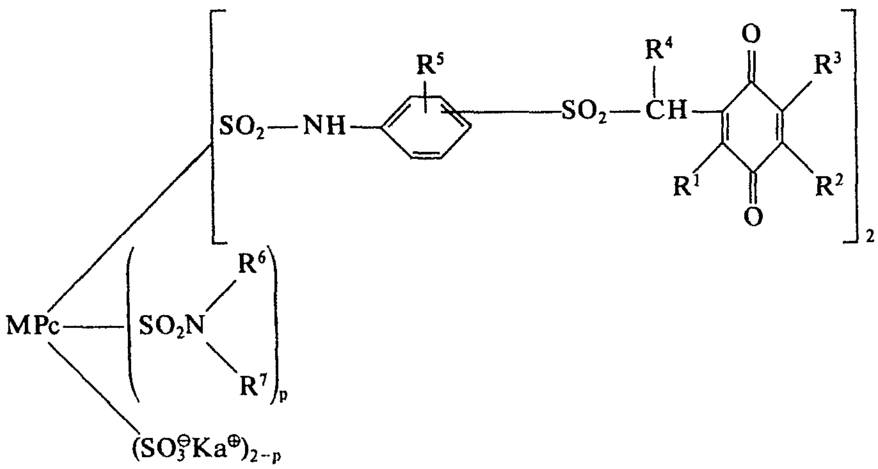

dans laquelle

MPc représente un radical tétravalent de phtalocyanine de formule:

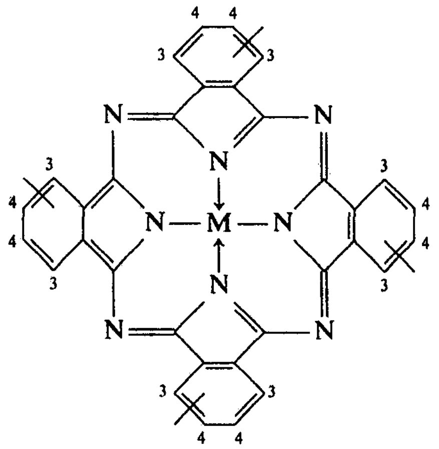

M = 2 H, Ni ou Cu

$R^1$, $R^2$ et $R^3$ représentent chacun un atome d'hydrogène, un atome d'halogène, un groupe alkyle, un groupe alcoxy, un groupe aryle ou un groupe acylamino, ou $R^2$ et $R^3$ complètent un noyau condensé,

$R^4$ représente un atome d'hydrogène ou un groupe alkyle;

$R^5$ représente un atome d'hydrogène, un atome d'halogène ou un groupe alkyle, un groupe alcoxy ou un groupe acylamino contenant chacun jusqu'à 4 atomes de carbone,

$R^6$ et $R^7$ représentent chacun un atome d'hydrogène ou un groupe alkyle éventuellement substitué, un groupe alcényle, un groupe aryle éventuellement substitué ou $R^6$ et $R^7$ ensemble représentent le radical nécessaire pour compléter un noyau pentagonal ou hexagonal saturé, $R^6$ et $R^7$ ensemble ne contenant pas plus de 7 atomes de carbone,

$Ka^{\oplus}$ représente un cation,

p = 0, 1 ou 2,

au moins un des radicaux $R^1$, $R^2$, $R^3$ et $R^4$ contenant un radical conférant une résistance à la diffusion.

2. Composé suivant la revendication 1, caractérisé en ce que, dans un radical support quinoide, $R^1$, $R^2$ et $R^3$ ensemble ne contiennent pas plus de 8 atomes de carbone et $R^4$ représente un radical alkyle contenant au moins 11 atomes de carbone.

3. Composé suivant la revendication 1, caractérisé en ce que $R^1$ représente un groupe n-propyle, tandis que $R^2$ et $R^3$ représentent chacun un groupe méthyle.

4. Composé suivant la revendication 1, caractérisé en ce que $R^5$ représente un groupe méthyle, un groupe méthoxy, un groupe acétamido ou un groupe méthylsulfonamido.

5. Matériau d'enregistrement de photographie en couleurs pour la formation d'images en couleurs suivant le procédé de transfert par diffusion chromatique, ce matériau contenant, en attribution à une couche d'émulsion photosensible à l'halogénure d'argent, un composé chromogène réductible et non diffusible qui, sous forme réduite, libère un colorant d'image bleu-vert diffusible, de même qu'un agent réducteur (composé donneur d'électrons) pour le composé chromogène, caractérisé en ce que, comme composé chromogène, il contient un composé répondant à la formule suivante:

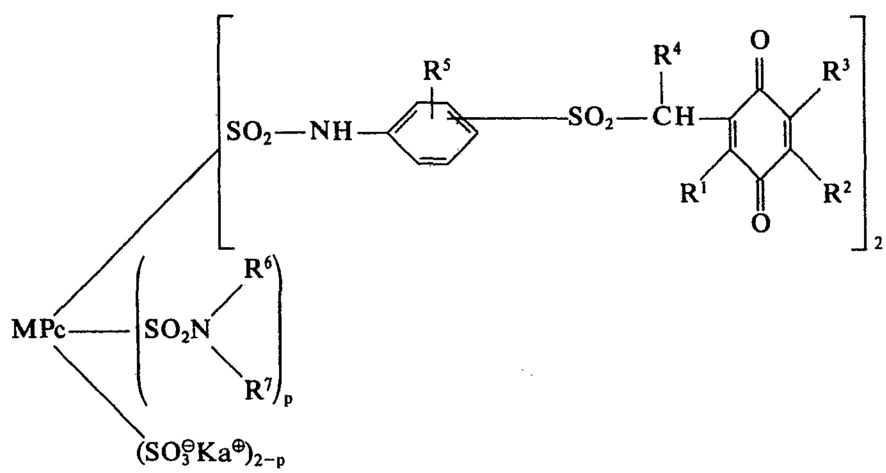

dans laquelle

MPc représente un radical tétravalent de phtalocyanine de formule:

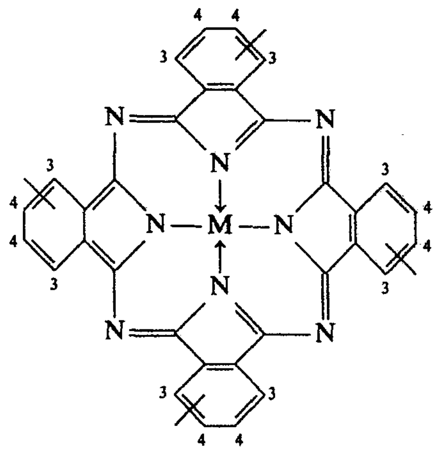

M = 2 H, Ni ou Cu

$R^1$, $R^2$ et $R^3$ représentent chacun un atome d'hydrogène, un atome d'halogène, un groupe alkyle, un groupe alcoxy, un groupe aryle éventuellement substitué ou un groupe acylamino, ou $R^2$ et $R^3$ complètent un noyau condensé,

$R^4$ représente un atome d'hydrogène ou un groupe alkyle,

$R^5$ représente un atome d'hydrogène, un atome d'halogène ou un groupe alkyle, un groupe alcoxy ou un groupe acylamino contenant chacun jusqu'à 4 atomes de carbone,

$R^6$ et $R^7$ représentent chacun un atome d'hydrogène ou un groupe alkyle éventuellement substitué, un groupe alcényle, un groupe aryle éventuellement substitué ou $R^6$ et $R^7$ ensemble représentent le radical nécessaire pour compléter un noyau pentagonal ou hexagonal saturé, $R^6$ et $R^7$ ensemble ne contenant pas plus de 7 atomes de carbone,

$Ka^{\oplus}$ représente un cation,

p = 0, 1 ou 2,

au moins un des radicaux $R^1$, $R^2$, $R^3$ et $R^4$ contenant un radical conférant une résistance à la diffusion.

6. Matériau d'enregistrement suivant la revendication 5, caractérisé en ce que, dans un radical support quinoïde, $R^1$, $R^2$ et $R^3$ ensemble ne contiennent pas plus de 8 atomes de carbone, tandis que $R^4$ représente un radical alkyle contenant au moins 11 atomes de carbone.

7. Matériau d'enregistrement suivant la revendication 5, caractérisé en ce $R^1$ représente un groupe n-propyle, tandis que $R^2$ et $R^3$ représentent chacun groupe méthyle.

8. Matériau d'enregistrement suivant la revendication 5, caractérisé en ce que $R^5$ représente un groupe méthyle, un groupe méthoxy, un groupe acétamido ou un groupe méthyl-sulfonamido.

9. Image en couleurs formée par voie photographique et constituée d'une couche réceptrice d'image disposée sur un support de couche et comportant un mordant cationique, ainsi que d'un colorant d'image bleu-vert qui y est contenu et réparti sous forme d'une image, caractérisée en ce que, comme colorant d'image, elle contient un composé anionique répondant à la formule suivante:

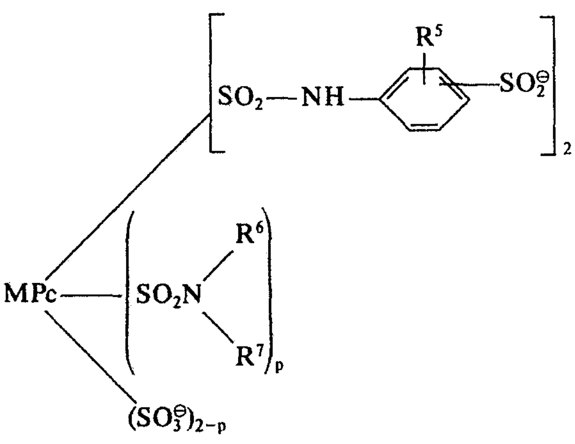

(I)

dans laquelle

MPc représente un radical tétravalent de phtalocyanine de formule:

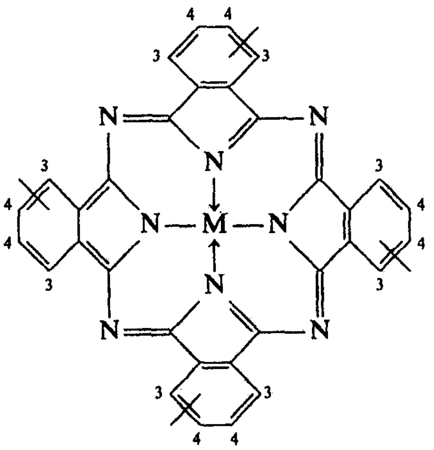

M = 2 H, Ni ou Cu

$R^5$ représente un atome d'hydrogène, un atome d'halogène ou un groupe alkyle, un groupe alcoxy ou un groupe acylamino contenant chacun jusqu'à 4 atomes de carbone,

$R^6$ et $R^7$ représentent chacun un atome d'hydrogène ou un groupe alkyle éventuellement substitué, un groupe alcényle, un groupe aryle éventuellement substitué ou $R^6$ et $R^7$ ensemble représentent le radical nécessaire pour compléter un noyau pentagonal ou hexagonal saturé, $R^6$ et $R^7$ ensemble ne contenant pas plus de 7 atomes de carbone,

p = 0, 1 ou 2.

10. Image en couleurs suivant la revendication 9, caractérisée en ce que $R^5$ représente un groupe méthyle, un groupe méthoxy, un groupe acétamido ou un groupe méthylsulfonamido.